# EUROPÄISCHE PATENTSCHRIFT

(11) **EP 3 244 362 B1**
(45) Veröffentlichungstag und Bekanntmachung des Hinweises auf die Patenterteilung: **29.09.2021**
(21) Anmeldenummer: 17174258.8
(22) Anmeldetag: 15.10.2013
(51) Int. Cl.: G06Q 20/38, G06Q 40/02, G06Q 30/06

(54) **VERFAHREN ZUR DURCHFÜHRUNG VON TRANSAKTIONEN**
METHOD FOR CARRYING OUT TRANSACTIONS
PROCÉDÉ DESTINÉ À L'EXÉCUTION DE TRANSACTIONS

(30) Priorität: 14.11.2012 DE 102012220774
(43) Veröffentlichungstag der Anmeldung: 15.11.2017
(62) Teilanmeldung aus: 13776812.3
(73) Patentinhaber: Giesen, Heinz, 48147 Münster (DE)
(72) Erfinder: Giesen, Heinz, 48147 Münster (DE)
(74) Vertreter: Richardt Patentanwälte PartG mbB

(56) Entgegenhaltungen:
- EP-A1- 1 150 227
- WO-A1-02/19211
- WO-A1-2004/036513
- WO-A1-2008/108861
- WO-A1-2012/125531
- US-A1- 2012 089 519

## Beschreibung

Die vorliegende Patentanmeldung ist eine Teilanmeldung zur Stammanmeidung EP 13 776 812.3, deren Offenbarungsgehalt vollumfänglich zum Gegenstand der vorliegenden Teilanmeldung gemacht wird.

Die Erfindung betrifft ein Verfahren zur Durchführung von Transaktionen zwischen einer Anzahl von Teilnehmern.

Aus dem Stand der Technik sind insbesondere für den Finanzsektor eine Vielzahl von Verfahren zur Durchführung von Transaktionen bekannt. Ein häufiger Schwachpunkt dieser Verfahren ist die Manipulierbarkeit der transaktionslimitierenden Daten, wie beispielsweise Bankverbindungen von Sendern und Empfängern einer Überweisung. Dies ist insbesondere im Bereich des Online-Bankings, aufgrund der Zugreifbarkeit des Transaktionskanals, beispielsweise durch man-in-themiddle-Attacken, problematisch. Um diese Angriffe zu verhindern, wurde die Verwendung von vorgangsindividuellen Transaktionsnummern (TAN-Verfahren), welche nur dem Überweisenden und dem Finanzinstitut bekannt sind und die bei jedem Transaktionsauftrag mit übermittelt werden müssen, eingeführt. Dieses Verfahren wurde unter anderem durch das iTAN, oder das chipTAN-Verfahren weiter hinsichtlich seiner Sicherheit gegenüber Manipulationen verbessert, wobei sich insbesondere das chipTAN durch einen Medienbruch auszeichnet. Ein Medienbruch bedeutet hierbei den Übergang von einem Medium, beispielsweise dem Internet, zu einem anderen Medium, beispielsweise der visuellen Erfassung eines Bildes. Hierdurch wird die Angreifbarkeit des Verfahrens reduziert, da für eine Manipulation des Verfahrens beide Medien angegriffen werden müssten.

Bezahlsysteme und entsprechende Verfahren, sowie Systeme zur Vereinfachung und Authentisierung von Transaktionen sind beispielsweise aus den Dokumenten WO 02/19211 A1, EP 1 150 227 A1 Aus EP 1 150 227 A1, WO 2004/036513, sowie aus US 2012/0089519 A1 bekannt.

Aus EP 2 536 062 A1 ist ferner ein Verfahren zur Durchführung einer Finanztransaktion zwischen einem Käufer und einem Händler bekannt, welches das Authentifizieren des Händlers gegenüber dem Käufer über ein unsicheres Kommunikationsnetzwerk mit hoher Bandbreite ermöglicht.

Aus WO 2012/125531 A1 sind ferner ein computer-implementiertes Verfahren und Systeme zur Ermöglichung von monetären Bezahlungen, wie Geldgeschenke an Zahlungsempfänger, unter Verwendung von Zahlungsverarbeitungsdiensten von Drittanbietern bekannt. Den Zahlungsempfängern sind dabei elektronisch lesbare einzigartige Identifier zugeordnet, welche sie potentiellen Geldgebern zeigen können.

Der Erfindung liegt demgegenüber die Aufgabe zugrunde, ein verbessertes Verfahren zur Durchführung von Transaktionen zu schaffen.

Die der Erfindung zugrunde liegende Aufgabe wird mit den Merkmalen von Patentanspruch 1 gelöst. Ausführungsformen der Erfindung sind in den abhängigen Patentansprüchen angegeben.

Nach einer Ausführungsform der Erfindung wird ein Verfahren zur Durchführung von Transaktionen zwischen einer Anzahl von Teilnehmern geschaffen. Den Teilnehmern der Transaktion ist jeweils ein eindeutiges Pseudonym zugeordnet. Die Zuordnung der Pseudonyme zu den jeweiligen Teilnehmern ist auf einem Notarserver hinterlegt. Weiter sind auf dem Notarserver die Transaktionsdaten der Teilnehmer gespeichert und den Teilnehmern eindeutig zugeordnet. Zur Durchführung des Verfahrens wird weiter ein Anwendungsprogramm und mindestens ein Transaktionsserver benötigt.

Transaktionsdaten sind hierbei solche Daten, ohne deren Kenntnis eine Durchführung einer Transaktion nicht möglich ist. Im Falle einer Überweisung wären die Transaktionsdaten beispielsweise die Bankverbindungen der Teilnehmer, im Falle der Übermittlung einer Nachricht beispielsweise Post- oder e-Mail-Adressen. Transaktionsdaten bleiben für eine Vielzahl von Transaktionen gleich, können also als Stammdaten bezeichnet werden.

Ein Notarserver ist wie auch ein Transaktionsserver ein Servercomputer. Dieser muss nicht zwingend eine physische Entität darstellen, sondern kann auch vollständig virtuell ausgeführt sein, beispielsweise als ausgelagerte Recheneinheit in einem Computernetzwerk. Dabei ist ein Notarserver vorzugsweise so ausgeführt, dass die gespeicherten Daten des Notarservers vor einem Zugriff durch Dritte geschützt sind und nur auf Anfrage eines Transaktionsservers dem Transaktionsserver bereitgestellt werden.

In einem ersten Schritt des Verfahrens wird das Pseudonym eines ersten Teilnehmers durch das Anwendungsprogramm erfasst. Die Erfassung des Pseudonyms kann beispielsweise durch manuelle Eingabe oder durch das Auslesen eines Datenspeichers geschehen. Am Beispiel einer Finanztransaktion wäre der erste Teilnehmer der Überweisende bzw. Sender. In einem zweiten Schritt des Verfahrens werden durch das Anwendungsprogramm die Pseudonyme einer beliebigen Zahl weiterer Teilnehmer erfasst. Hierbei erfolgt die Erfassung der Pseudonyme vorzugsweise auf sensorischem Weg, also beispielsweise durch Auslesen einer Magnetkarte oder die visuelle Erfassung eines Barcodes oder eines QR-Codes. Am Beispiel einer Finanztransaktion wären die besagten weiteren Teilnehmer die Empfänger einer Überweisung. Sobald das Anwendungsprogramm alle Teilnehmer, die an der Transaktion beteiligt sind, erfasst hat, werden dem Anwendungsprogramm die Transaktionsparameter mitgeteilt. Wiederum am Beispiel einer Finanztransaktion wären die Transaktionsparameter der zu überweisende Betrag oder ein Verwendungszweck. Transaktionsparameter können also für jede Transaktion unterschiedlich sein und als Bewegungsdaten bezeichnet werden.

Nachdem die Pseudonyme der Teilnehmer sowie die Transaktionsparameter durch das Anwendungsprogramm erfasst wurden, wird der gesamte Transaktionsdatensatz, welcher eben diese Pseudonyme und Transaktionsparameter beinhaltet, an zumindest einen Transaktionsserver weitergeleitet. Die Weiterleitung kann hierbei beispielsweise über das Internet oder einen beliebigen anderen Kommunikationskanal erfolgen. Sobald der Transaktionsserver einen Transaktionsdatensatz erhält, extrahiert er aus diesem die Pseudonyme der beteiligten Teilnehmer und übermittelt diese an den Notarserver. Da auf dem Notarserver eine Zuordnung der Pseudonyme zu den entsprechenden Teilnehmern hinterlegt ist, ist der Notarserver in der Lage, die Teilnehmer anhand ihrer Pseudonyme zu identifizieren. Daher ist der Notarserver in der Lage, dem Transaktionsserver die Transaktionsdaten der Teilnehmer zu übermitteln. Sobald der Transaktionsserver die Transaktionsdaten der Teilnehmer empfangenen hat, kann er entweder die Transaktion durchführen oder anstoßen.

Die beschriebene Ausführungsform ist besonders vorteilhaft, da der Transaktionsdatensatz lediglich die Pseudonyme der Teilnehmer enthält. Es ist also nicht möglich, die Transaktionsdaten, wie beispielsweise Bankverbindungen, im Transaktionsdatensatz zu manipulieren, außer durch vollständiges Austauschen der Pseudonyme. Dies setzt allerdings voraus, dass ein etwaiger Angreifer ebenfalls auf dem Notarserver registriert ist. Hierdurch ist ein Angreifer leicht zu identifizieren. Einzig die Transaktionsparameter können manipuliert werden, was jedoch im Allgemeinen keinen Schaden verursacht, da die Teilnehmer der Transaktion dies bemerken und korrigieren können, Im Falle einer Finanztransaktion könnte so beispielsweise lediglich der zwischen den Teilnehmern überwiesene Betrag verändert werden. Eine Umleitung des Zahlungsverkehrs auf ein fremdes Konto wäre ohne eine Enthüllung der Identität eines Angreifers jedoch nicht möglich.

Nach einer Ausführungsform der Erfindung sind den Pseudonymen der Teilnehmer jeweils eine Reihe von Daten zugeordnet. Damit eine Transaktion durchgeführt werden kann, müssen zunächst die Transaktionsdaten eines jeden Teilnehmers hinterlegt sein. Diese werden wie zuvor beschrieben dem Transaktionsserver durch den Notarserver auf Anfrage bereitgestellt. Neben diesen Transaktionsdaten sind weiter Informationen gespeichert, die einen Teilnehmer eindeutig identifizieren. Dies können zum Beispiel Name, Adresse, Geburtsort und Geburtsdatum, eine Ausweisnummer oder eine Kombination dieser Daten sein. Weiter ist zu jedem Teilnehmer eine eindeutige Kanal-Information auf dem Notarserver hinterlegt, welche geeignet ist, einen Kommunikationskanal zwischen Notarserver und Anwendungsprogramm zu spezifizieren. Dies kann beispielsweise eine E-Mail-Adresse des Teilnehmers oder auch eine Postadresse sein.

Die Aufnahme der vorgenannten Daten kann beispielsweise bei der Registrierung eines Teilnehmers am Notarserver dadurch erfolgen, dass jeder Teilnehmer ein Formular mit persönlichen Daten ausfüllt. Die eingetragenen Daten werden anschließend in den Notarserver eingegeben, oder durch diesen erfasst. Die Daten der Teilnehmer sind hierbei nur dem Notarserver bekannt und vor dem Zugriff durch andere geschützt. Im Zuge der Registrierung kann weiter beispielsweise durch eine Kontrolle eines Ausweisdokuments die Identität des Teilnehmers verifiziert werden.

Wie zuvor erwähnt, wird jedem Teilnehmer ein eindeutiges Pseudonym zugeordnet. Nach einer Ausführungsform der Erfindung wird als Pseudonym der verschlüsselte Datensatz eines Teilnehmers festgelegt. Der zur Verschlüsselung verwendete Schlüssel wird ausschließlich auf dem Notarserver hinterlegt, sodass das Pseudonym nur durch den Notarserver zu entschlüsseln ist. Hierdurch muss nicht zwingend der vollständige Datensatz eines jeden Teilnehmers auf dem Notarserver hinterlegt werden, sondern lediglich eine Zuordnung von Pseudonymen und Schlüsseln. Dabei kann zur Verschlüsselung ein beliebiges Verfahren verwendet werden. Weiter ist es an dieser Stelle möglich den Datensatz symmetrisch unter Verwendung eines One-Time-Pad zu verschlüsseln, sodass eine Entschlüsselung des Pseudonyms ohne Kenntnis des Schlüssels ausgeschlossen werden kann. Da die Ver- und Entschlüsselung des Pseudonyms durch die selbe Entität erfolgt, ist die Problematik, die eine Übermittlung des Schlüssels mit sich bringen würde hinfällig.

Nach einer Ausführungsform der Erfindung wird als Pseudonym eines Teilnehmers der QR-Code des zuvor beschriebenen verschlüsselten Datensatzes des Teilnehmers festgelegt. Die Verwendung des Pseudonyms in Form eines QR-Codes erleichtert im späteren Ablauf die Erfassung des Pseudonyms, da ein QR-Code mit geringem Aufwand visuell erfasst werden kann, beispielsweise durch die Kamera eines Smartphones oder Tablet-PCs.

Wie zuvor beschrieben, ist es möglich, die Transaktionsparameter, welche in einem Transaktionsdatensatz enthalten sind, zu manipulieren. Dies kann allerdings gemäß einer Ausführungsform der Erfindung verhindert werden, indem ein Transaktionsdatensatz vor der Übermittelung von der Anwendungssoftware zum Transaktionsserver durch die Anwendungssoftware verschlüsselt wird. Die Entschlüsselung des Transaktionsdatensatzes erfolgt dann durch den Transaktionsserver. Durch eine geeignete Wahl des Verschlüsselungsverfahrens kann die Sicherheit des zuvor beschriebenen Verfahrens an die jeweiligen Sicherheitsanforderungen angepasst werden.

Die Art der Verschlüsselung sowie der verwendete Schlüssel können gemäß einer Ausführungsform der Erfindung für jede Art von Transaktion oder auch für jede Transaktion selbst individuell festgelegt werden. Es können hierbei symmetrische, asymmetrische oder auch hybride Verschlüsselungsverfahren verwendet werden. Weiter ist es möglich, einen Transaktionsdatensatz nur teilweise zu verschlüsseln. So können zum Beispiel kritische Transaktionsparameter, wie beispielsweise ein Überweisungsbetrag oder eine geheime Information geschützt werden, während unkritische Transaktionsparameter, wie beispielsweise ein Begleittext, nicht verschlüsselt werden müssen.

Nach einer Ausführungsform der Erfindung wird eine Transaktion nur dann durchgeführt, wenn zumindest ein Teil der Teilnehmer der Transaktion durch den Transaktionsserver oder den Notarserver authentifiziert wurde. Hierbei erfolgt die Authentifizierung der Teilnehmer vorzugsweise erst nach Eingang eines Transaktionsdatensatzes bei einem Transaktionsserver. Dadurch, dass die Teilnehmer der Transaktion durch Transaktions- oder Notarserver authentifiziert wurden, wird vor der Durchführung der Transaktion sichergestellt, dass die im Transaktionsdatensatz enthaltenen Pseudonyme der Teilnehmer nicht ausgetauscht wurden. Ein Austauschen der Pseudonyme würde nach dieser Ausführungsform also spätestens bei der Authentifizierung der Teilnehmer erkannt.

Nach einer Ausführungsform der Erfindung erfolgt die Authentifizierung der Teilnehmer über Anwendungsprogramme, welche jeweils auf die Teilnehmer registriert sind unter zusätzlicher Verwendung eines Gültigkeitszeitfensters für einen Transaktionsdatensatz. Hierbei ist vorzugsweise jedem Teilnehmer ein eigenes Anwendungsprogramm zugeordnet und die Zuordnung der Anwendungsprogramme zu den Teilnehmern auf dem Notarserver hinterlegt. Soll nun ein Transaktionsdatensatz an einen Transaktionsserver übermittelt werden, wird zunächst für diesen Transaktionsdatensatz ein Gültigkeitszeitfenster festgelegt. Der Transaktionsdatensatz wird dann durch einen Transaktionsserver nur dann verarbeitet, wenn der Verarbeitungszeitpunkt in das Gültigkeitszeitfenster des Transaktionsdatensatzes fällt. Hierzu wird durch das Anwendungsprogramm ein Zeitstempel in den Transaktionsdatensatz eingefügt. Dieser dokumentiert den Zeitpunkt, an dem der Transaktionsdatensatz erstellt wurde.

Geht nun ein Transaktionsdatensatz bei einem Transaktionsserver ein, überprüft dieser, ob die aktuelle Zeit innerhalb des Gültigkeitszeitfensters unter Berücksichtigung des Zeitstempels des Transaktionsdatensatzes liegt. Ist dies der Fall, wird über das oder die Anwendungsprogramme der Teilnehmer eine Bestätigung des Transaktionsauftrags angefordert. Hierbei kann die Anforderung entweder durch den Transaktionsserver oder auch den Notarserver versendet werden. Eine Bestätigungsanforderung kann beispielsweise darin bestehen, dass, ausgelöst durch Transaktions- oder Notarserver, auf dem Anwendungsprogramm der Teilnehmer ein Popup-Fenster geöffnet wird, welches den Teilnehmer darüber informiert, dass ein Transaktionsauftrag eingegangen ist. Es besteht dann die Möglichkeit, diesen Transaktionsauftrag zu bestätigen oder abzulehnen. Erst wenn alle angeforderte Bestätigungen eingegangen sind, wird eine Transaktion durchgeführt.

Für den Fall, dass der Zeitpunkt der Verarbeitung eines Transaktionsdatensatzes außerhalb des Gültigkeitszeitfensters liegt, wird der Transaktionsdatensatz durch den Transaktionsserver verworfen. Hierdurch wird ein Zurückhalten der Transaktionsdatensätze zur späteren Verarbeitung verhindert. Durch die Authentifizierung der Teilnehmer wird weiter vermieden, dass eine Transaktion an einen falschen Empfänger erfolgt. Es kann beispielsweise der Sender seinerseits mit der Bestätigung des Transaktionsauftrags warten, bis bei den Empfängern die Anforderung einer Bestätigung eingegangen ist. Sobald eine Bestätigungsanforderung bei den Empfängern eingegangen ist, ist sichergestellt, dass die Pseudonyme der Empfänger nicht manipuliert wurden.

Nach einer Ausführungsform der Erfindung ist das Anwendungsprogramm, welches die Pseudonyme erfasst und an welches die Transaktionsparameter übermittelt werden, auf einen der Teilnehmer registriert. Hierdurch ist dessen Pseudonym dem Anwendungsprogramm bekannt und muss nicht für jeden Transaktionsauftrag erneut erfasst werden. Wird ein Transaktionsdatensatz von diesem Anwendungsprogramm verschickt, wird automatisch das Pseudonym des Teilnehmers, auf den das Anwendungsprogramm registriert wurde, in den Transaktionsdatensatz eingefügt. Weiter ist durch die Registrierung des Anwendungsprogramms auf den Teilnehmer eine eindeutige Zuordnung des Anwendungsprogramms zu diesem Teilnehmer durch den Notarserver oder auch den Transaktionsserver möglich. Hierdurch können Transaktionsdatensätze, welche von dem registrierten Anwendungsprogramm an den Transaktionsserver gesendet werden, einem ersten Teilnehmer eindeutig zugeordnet werden. Eine unbemerkte Manipulation des Pseudonyms des ersten Teilnehmers ist damit ausgeschlossen. Weiter kann gemäß der nachfolgend beschriebenen Ausführungsform die Registrierung eines Anwendungsprogramms auf einen Teilnehmer auch eine Zuordnung des Anwendungsprogramms zu einem Endgerät enthalten. Hierdurch kann verhindert werden, dass das Anwendungsprogramm vom Endgerät des Teilnehmers extrahiert und auf einem anderen Endgerät gegen den Willen des Teilnehmers genutzt wird.

Nach einer Ausführungsform der Erfindung beinhaltet die Registrierung eines Anwendungsprogramms auf einen Teilnehmer folgende Schritte:
Zunächst wird durch das Anwendungsprogramm das Pseudonym des Teilnehmers, auf den das Anwendungsprogramm registriert werden soll, sensorisch erfasst. Dies kann wahlweise während der Installation des Anwendungsprogramms oder danach geschehen. Anschließend ermittelt das Anwendungsprogramm einen Parameter, welcher das Endgerät, auf dem das Anwendungsprogramm installiert ist, eindeutig identifiziert. Dies kann beispielsweise der Globally Unique Identifier (GUID) des Endgeräts sein, welcher meist in der Hardware des Endgeräts hinterlegt ist. Anschließend übermittelt das Anwendungsprogramm das Pseudonym des Teilnehmers, auf den das Anwendungsprogramm registriert werden soll, sowie den das Endgerät eindeutig identifizierenden Parameter an den Notarserver. Bevor diese Daten auf dem Notarserver gespeichert werden, muss jedoch zunächst verifiziert werden, dass es sich bei dem Teilnehmer, der eine Registrierung einer Anwendungssoftware auf ein Pseudonym durchführen will, auch tatsächlich um den Teilnehmer handelt, welcher auf dem Notarserver zu diesem Pseudonym zugeordnet ist. Hierzu wird neben den bereits genannten Daten eine dem Teilnehmer durch den Notarserver eindeutig zuordenbare Teilnehmer-Information an den Notarserver übermittelt. Dies kann beispielsweise eine Sicherheitsfrage, eine persönliche Information, welche im Datensatz des Teilnehmers enthalten ist, oder auch eine beliebige Nummer sein, die bei der Anmeldung des Teilnehmers am Notarserver erzeugt wurde und nur dem Teilnehmer und dem Notarserver bekannt ist. Bei Eingang einer Registrierungsanfrage am Notarserver überprüft dieser nun, ob die übermittelte Teilnehmer-Information im Datensatz des Teilnehmers, welchem das Pseudonym zugeordnet ist, enthalten ist, Ist dies der Fall, wird dem Datensatz des Teilnehmers zusätzlich eine Information über das Endgerät, auf dem ein Anwendungsprogramm registriert wurde, hinzugefügt.

Nach einer Ausführungsform der Erfindung wird ein System vorgestellt, welches mindestens einen Transaktionsserver und einen Notarserver beinhaltet. Ein Transaktionsserver ist hierbei angepasst um Transaktionsdatensätze, die Transaktionsparameter und Pseudonyme von Teilnehmern beinhalten, zu lesen und eine entsprechende Transaktion durchzuführen und/oder anzustoßen. Der Notarserver enthält Datensätze der Teilnehmer des Verfahrens, wobei die Datensätze folgende Informationen beinhalten:
- Das Pseudonym eines Teilnehmers,
- Daten, die den Teilnehmer eindeutig identifizieren,
- Transaktionsdaten des Teilnehmers;
wobei der Notarserver auf Anfrage des Transaktionsservers die transaktionsrelevanten Daten, die zu einem im Transaktionsdatensatz enthaltenen Pseudonym gehören, dem Transaktionsserver bereitstellt.

Nach einer Ausführungsform der Erfindung beinhaltet das zuvor beschriebene System weiter ein Endgerät eines Teilnehmers, wobei auf dem Endgerät des Teilnehmers ein Anwendungsprogramm, welches die Durchführung des zuvor beschriebenen Verfahrens ermöglicht, installiert ist.

Nach einer Ausführungsform der Erfindung ist der Notarserver des zuvor beschriebenen System angepasst, das Endgerät, auf dem das Anwendungsprogramm installiert ist, einem Teilnehmer eindeutig zuzuordnen.

Nach einer Ausführungsform der Erfindung wird ein Computerprogrammprodukt vorgestellt, welches angepasst ist um die zuvor beschrieben Verfahrensschritte durchzuführen.

Im Weiteren werden Ausführungsformen der Erfindung mit Bezugnahme auf die Zeichnungen näher erläutert. Es zeigen:
- Figur 1: ein Flussdiagramm eines erfindungsgemäßen Verfahrensablaufs,
- Figur 2: ein Flussdiagramm eines erfindungsgemäßen Verfahrensablaufs mit einem registrierten Anwendungsprogramm,
- Figur 3: ein Flussdiagramm eines erfindungsgemäßen Verfahrensablaufs mit dem zusätzlichen Schritt der Authentifizierung der Teilnehmer,
- Figur 4: ein Flussdiagramm eines erfindungsgemäßen Verfahrensablaufs mit registriertem Programm und Authentifizierung der Teilnehmer,
- Figur 5: ein Flussdiagramm eines erfindungsgemäßen Verfahrensablaufs zur Registrierung eines Anwendungsprogramms auf einem Teilnehmer,
- Figur 6: ein Blockdiagramm eines Systems, welches die Durchführung eines erfindungsgemäßen Verfahrens ermöglicht.

Im Weiteren werden Elemente der nachfolgenden Ausführungsformen, die einander entsprechen oder identisch sind, jeweils mit denselben Bezugszeichen gekennzeichnet.

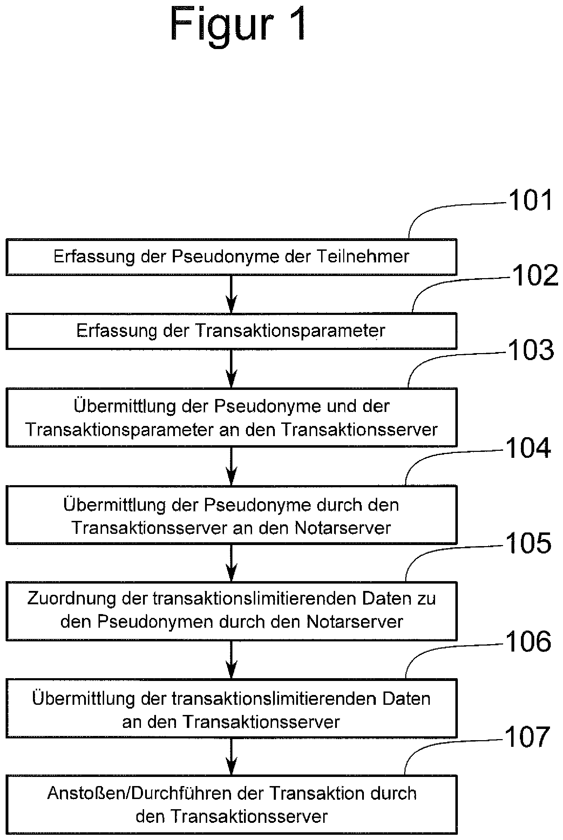

Die Figur 1 zeigt ein Flussdiagramm einer erfindungsgemäßen Ausführungsform des Verfahrens. Eine Durchführbarkeit des Verfahrens setzt zumindest das Vorhandensein von einem Transaktionsserver, einem Notarserver, einer Anzahl von Teilnehmern sowie ein Anwendungsprogramm voraus. Dabei ist jedem Teilnehmer ein eindeutiges Pseudonym zugeordnet, wobei die Zuordnung der Pseudonyme zu den Teilnehmern auf dem Notarserver hinterlegt ist. Weiterhin sind auf dem Notarserver den Teilnehmern deren Transaktionsdaten zugeordnet. Die Transaktionsdaten eines Teilnehmers können beispielsweise dessen Bankverbindungen, Postadressen oder ähnliches sein.

In einem ersten Schritt 101 werden die Pseudonyme der Teilnehmer, welche an der Transaktion beteiligt sind, erfasst. Die Erfassung der Pseudonyme erfolgt hierbei durch das Anwendungsprogramm, beispielsweise durch Auslesen eines Speichers, in dem die Pseudonyme hinterlegt sind oder durch die visuelle Erfassung eines Barcodes, welcher die Pseudonyme enthält. Nachdem die Pseudonyme der Teilnehmer erfasst wurden, werden durch das Anwendungsprogramm die Transaktionsparameter erfasst 102. Die Transaktionsparameter können beispielsweise ein zwischen zwei Teilnehmern zu überweisender Geldbetrag sein oder - erfindungsgemäß - eine zu übermittelnde Nachricht.

Die Kombination aus Pseudonym und Transaktionsparametern stellt einen Transaktionsdatensatz dar. Dieser wird im nächsten Schritt 103 durch das Anwendungsprogramm an einen Transaktionsserver übermittelt. Der Transaktionsserver kann jedoch nicht die Pseudonyme den Teilnehmern zuordnen. Daher erfolgt in einem vierten Schritt 104 die Übermittlung der Pseudonyme, welche im Transaktionsdatensatz enthalten sind, an den Notarserver durch den Transaktionsserver. Der Notarserver ist wiederum aufgrund der bei ihm hinterlegten Zuordnung von Teilnehmern und Pseudonymen in der Lage, den Pseudonymen, welche vom Transaktionsserver übermittelt wurden, die entsprechenden Teilnehmer zuzuordnen 105. Da zu jedem Teilnehmer auch dessen Transaktionsdaten hinterlegt sind, können diese durch den Notarserver an den Transaktionsserver übermittelt werden 106, sodass der Transaktionsserver eine Transaktion gemäß des zuvor erhaltenen Transaktionsdatensatzes anstoßen oder durchführen kann 107.

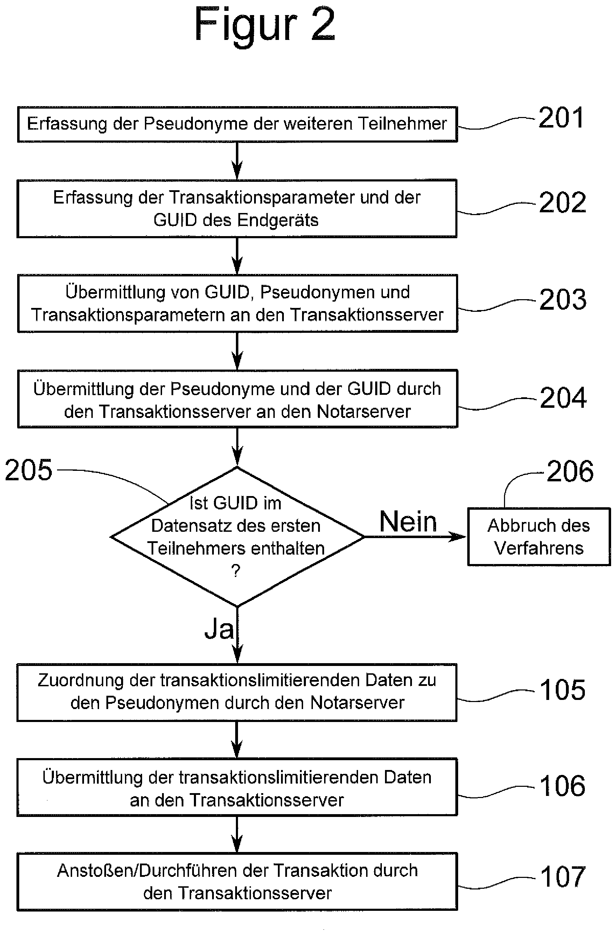

Die Figur 2 zeigt ein Flussdiagramm einer erfindungsgemäßen Ausführungsform des Verfahrens, wobei das Verfahren um die Registrierung des Anwendungsprogramms, welches den Transaktionsdatensatz versendet, auf einen der Teilnehmer erweitert ist. Dabei wird im Zuge der Registrierung des Programms der Globally Unique Identifier (GUID) des Endgeräts, auf dem das Anwendungsprogramm installiert ist, auf dem Notarserver dem Datensatz des Teilnehmers, welcher das Anwendungsprogramm registriert, zugeordnet.

Da das Anwendungsprogramm auf einen der Teilnehmer registriert ist, ist dessen Pseudonym dem Anwendungsprogramm bekannt. Daher werden im ersten Schritt 201 lediglich die Pseudonyme der weiteren Teilnehmer durch das Anwendungsprogramm erfasst. Das Pseudonym des ersten Teilnehmers, welcher das Anwendungsprogramm registriert hat, wird durch das Anwendungsprogramm dem Datensatz hinzugefügt. Im zweiten Schritt 202 wird neben den Transaktionsparametern der Globally Unique Identifier (GUID) des Endgeräts durch das Anwendungsprogramm erfasst. Im dritten Schritt 203 wird der Transaktionsdatensatz, welcher gegenüber der in Figur 1 gezeigten Ausführungsform um die GUID des verwendeten Endgeräts erweitert wurde, durch das Anwendungsprogramm an den Transaktionsserver übermittelt.

Analog zum zuvor beschriebenen Verfahren werden die Pseudonyme der Teilnehmer durch den Transaktionsserver aus dem Transaktionsdatensatz extrahiert und an den Notarserver übermittelt. Zusätzlich zu den Pseudonymen wird auch die GUID, welche im Transaktionsdatensatz enthalten ist, an den Notarserver weitergegeben. Der Notarserver prüft nun, ob die erhaltene GUID im Datensatz des ersten Teilnehmers enthalten ist 205. Ist dies nicht der Fall, wird das Verfahren abgebrochen 206. Stimmt jedoch die Zuordnung der GUID mit dem Pseudonym des Teilnehmers überein, so werden die Verfahrensschritte 105 ― 107 analog zu dem in Figur 1 dargestellten Verfahren durchgeführt.

Durch die Verwendung eines registrierten Anwendungsprogramms wird eine unbemerkte Manipulation des Pseudonyms des ersten Teilnehmers verhindert. Sobald das Pseudonym des ersten Teilnehmers manipuliert wurde, stimmt die Zuordnung des Pseudonyms zu der übermittelten GUID nicht mit den Informationen des Notarservers überein, sodass das Verfahren sofort abgebrochen wird.

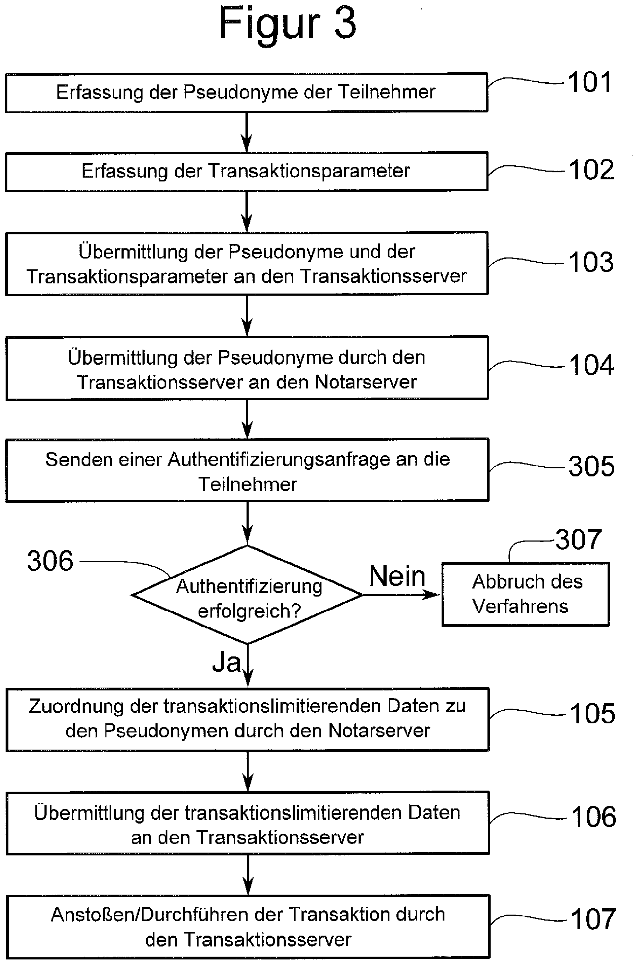

Die Figur 3 zeigt ein Flussdiagramm einer erfindungsgemäßen Ausführungsform des Verfahrens, wobei das Verfahren um die Authentifizierung der Teilnehmer erweitert ist. Die Authentifizierung setzt voraus, dass die Teilnehmer des Verfahrens über ein Anwendungsprogramm verführen, dass auf sie registriert ist.

Die Verfahrensschritte 101 - 104 verlaufen identisch zu jenen der Figur 1. Nachdem der Notarserver die Pseudonyme, welche im Transaktionsdatensatz enthalten sind, vom Transaktionsserver erhalten hat, wird eine Authentifizierungsanfrage an die Teilnehmer gesendet 305. Hierzu ist es notwendig, dass jeder Teilnehmer über ein registriertes Anwendungsprogramm verfügt. Der Notarserver muss überdies in der Lage sein, mit den Anwendungsprogrammen der Teilnehmer zu kommunizieren. Zum Zwecke der Authentifizierung kann beispielsweise eine Anfrage an das Anwendungsprogramm der Teilnehmer geschickt werden, welche durch die Teilnehmer manuell bestätigt werden muss. Die Anfrage kann hierbei beispielsweise die Information enthalten, zwischen wem eine Transaktion durchgeführt werden soll und welche Transaktionsparameter übermittelt wurden.

Wird die Authentifizierungsanfrage 306 von wenigstens einem Teilnehmer nicht bestätigt, so wird das Verfahren abgebrochen 307. Wenn jedoch alle Teilnehmer die Authentifizierungsanfrage bestätigen, wird das Verfahren gemäß den zuvor beschriebenen Schritten 105 - 107 fortgesetzt.

Durch den zusätzlichen Schritt der Authentifizierungsabfrage kann beispielsweise ein erster Teilnehmer, welcher eine Transaktion an die übrigen Teilnehmer durchführen will, seinerseits mit der Bestätigung der Authentifizierungsanfrage warten, bis er weiß, dass alle anderen Teilnehmer ebenfalls die Authentifizierungsanfrage bestätigt haben. Dies kann beispielsweise dadurch realisiert sein, dass der erste Teilnehmer die weiteren Teilnehmer anruft und nachfragt, ob eine Authentifizierungsanfrage, welche der vorgesehenen Transaktion entspricht, eingegangen ist. Sobald dies der Fall ist, ist ausgeschlossen, dass die Transaktion, welche durchgeführt werden soll, an andere Personen umgeleitet wird.

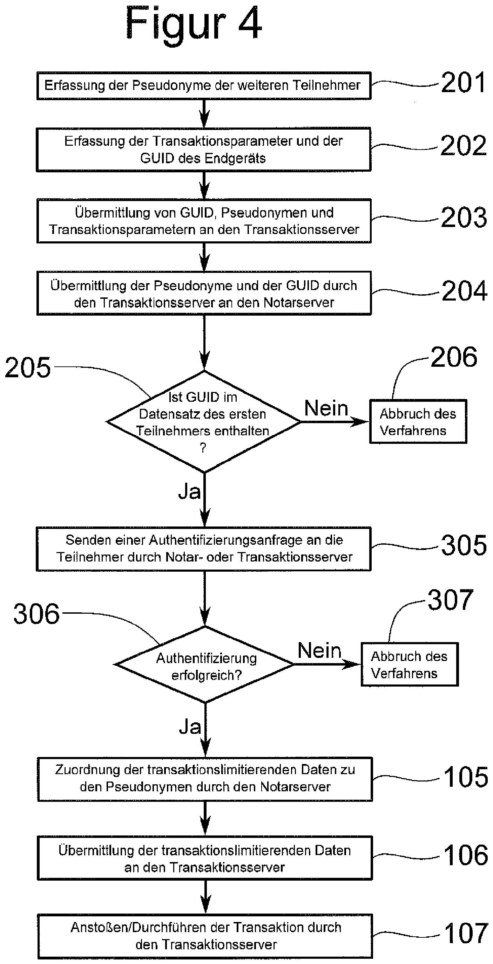

Die Figur 4 ist ein Flussdiagramm einer erfindungsgemäßen Ausführungsform des Verfahrens, wobei das Verfahren um die zusätzlichen Schritte der Registrierung eines Anwendungsprogrammes sowie der Anfrage einer Authentifizierung erweitert ist.

Die Verfahrensschritte 201 ― 204 sind analog zu jenen in Figur 2. Sobald die GUID, welche im Transaktionsdatensatz enthalten ist, dem Pseudonym des ersten Teilnehmers eindeutig zugeordnet werden konnte, wird eine Authentifizierungsanfrage an die übrigen Teilnehmer durch den Notar- oder den Transaktionsserver gesendet 305. Erst nach erfolgreicher Authentifizierung der weiteren Teilnehmer werden die Verfahrensschritte 105 ― 107 gemäß den Beschreibungen zu Figur 1 durchgeführt. Dabei können die Sicherheitsabfragen 204 sowie 305 auch in Ihrer Reihenfolge vertauscht sein. Insgesamt ist durch diese Ausprägungsform des Verfahrens die Identität des ersten Teilnehmers aufgrund der Registrierung gesichert, während die Identität der weiteren Teilnehmer aufgrund der Authentifizierungsanfrage gesichert ist. Somit wird insgesamt eine unbemerkte Manipulation von Pseudonymen der Teilnehmer der Transaktion verhindert.

In den Figuren 1 - 4 wurde die Verschlüsselung eines Transaktionsdatensatzes durch das Anwendungsprogramm, sowie die anschließende Entschlüsselung durch den Transaktionsserver für eine bessere Übersichtlichkeit nicht berücksichtigt.

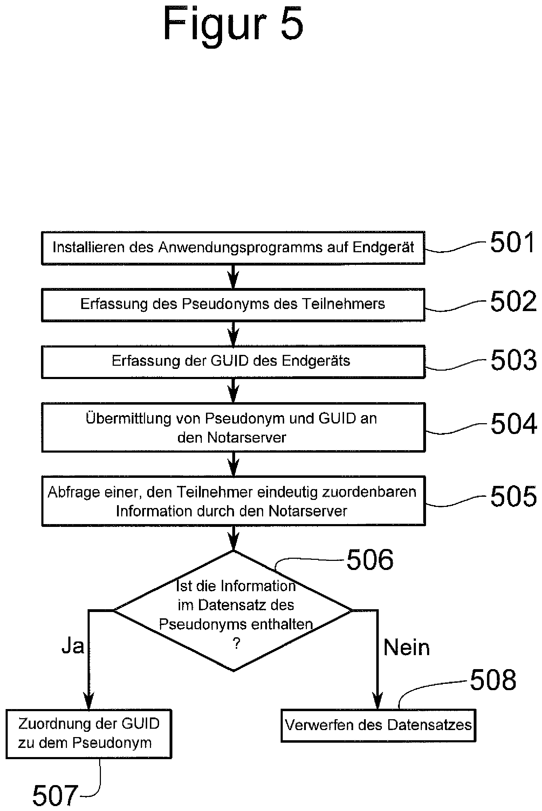

Figur 5 ist ein Flussdiagramm eines erfindungsgemäßen Verfahrens zur Registrierung eines Anwendungsprogramms auf einen Teilnehmer.

In einem ersten Schritt 501 wird das Anwendungsprogramm auf einem Endgerät des Teilnehmers installiert. Ein Endgerät kann hierbei beispielsweise ein Smartphone, ein Personal Computer, ein Tablet PC oder Ähnliches sein. In einem zweiten Schritt 502 wird das Pseudonym des Teilnehmers, welcher das Anwendungsprogramm registrieren möchte, durch das Anwendungsprogramm erfasst. Die Erfassung des Pseudonyms kann wahlweise noch während der Installation des Anwendungsprogramms erfolgen oder danach. Die Erfassung des Pseudonyms selbst kann beispielsweise durch Einlesen eines Barcodes oder Auslesen eines Speichermediums erfolgen. Das Pseudonym des Teilnehmers wird nach der Erfassung desselben durch das Anwendungsprogramm gespeichert. Anschließend wird durch das Anwendungsprogramm der Globally Unique Identifier des Endgeräts erfasst 503. Dieser ist üblicherweise in der Hardware des Endgeräts hinterlegt. Nachdem Pseudonym und GUID erfasst wurden, werden sie an den Notarserver übermittelt 504. Der Notarserver identifiziert nach Eingang von Pseudonym und GUID den Teilnehmer anhand seines Pseudonyms und fragt über einen bei der Anmeldung durch eine Kanal-Information spezifizierten Kommunikationskanal eine zusätzliche Teilnehmer-Information des Teilnehmers ab 504. Der entsprechende Kommunikationskanal kann beispielsweise durch eine Post- oder E-Mail Adresse definiert sein. Eine Teilnehmer-Information kann beispielsweise das Geburtsdatum, die Adresse, die Personalausweisnummer des Teilnehmers oder Ähnliches sein. Hierbei ist es notwendig, dass die Teilnehmer-Information eingangs bei der Anmeldung des Teilnehmers beim Notarserver im Datensatz des Teilnehmers hinterlegt wurde und dem Teilnehmer durch den Notarserver zugeordnet werden kann. Der Notarserver überprüft nach Eingang der Teilnehmer-Information, ob die übermittelte Teilnehmer-Information im Datensatz, welcher dem Pseudonym auf dem Notarserver zugeordnet ist, enthalten ist 506. Ist dies der Fall, wird die GUID des Endgeräts, auf dem das Anwendungsprogramm installiert wurde, dem Datensatz des Pseudonyms zugeordnet 507. Ist die Teilnehmer-Information jedoch nicht im Datensatz des Pseudonyms enthalten, wird der Datensatz verworfen und die Registrierung abgebrochen 508.

Die Registrierung des Anwendungsprogramms auf einen Teilnehmer ermöglicht es dem Notarserver, eine Authentifizierungsanfrage an dieses Anwendungsprogramm zu schicken. Dies trägt gemäß den obigen Ausführungen zur Sicherheit des Verfahrens bei. Weiter steigert eine Registrierung des Anwendungsprogramms die Anwenderfreundlichkeit, da das Pseudonym des Teilnehmers, auf den das Anwendungsprogramm registriert ist, nicht bei jedem Transaktionsvorgang erneut eingelesen werden muss, sondern durch das Anwendungsprogramm dem Transaktionsdatensatz automatisch hinzugefügt wird.

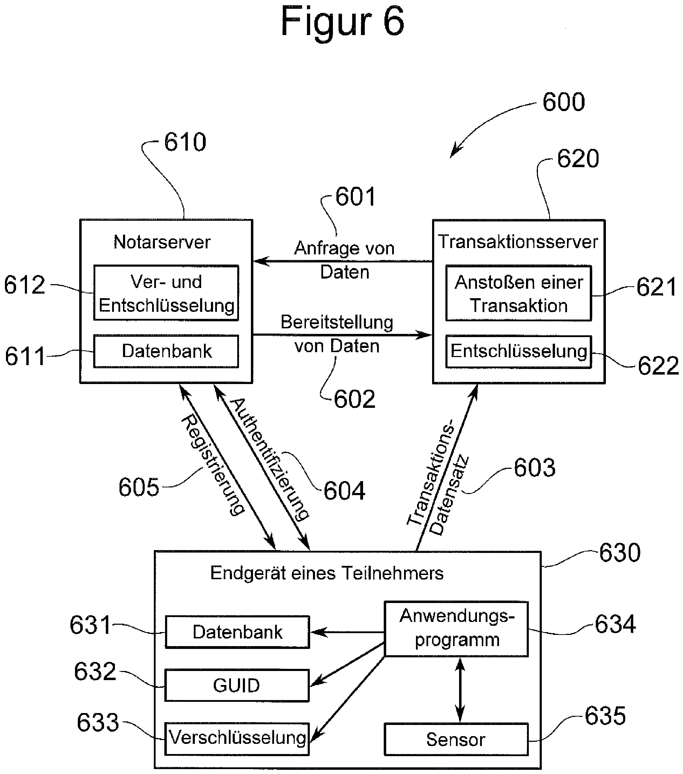

Die Figur 6 zeigt ein System 600, welches die Durchführung eines Verfahrens gemäß einer Ausführungsform der Erfindung ermöglicht. Hierzu werden im Wesentlichen ein Notarserver 610, ein Transaktionsserver 620 sowie das Endgerät eines Teilnehmers 630 benötigt.

Der Notarserver 610 enthält eine Datenbank 611, auf welcher zumindest die Zuordnung von Pseudonymen zu Teilnehmern sowie die Transaktionsdaten der Teilnehmer hinterlegt sind. Für den Fall, dass gemäß obiger Ausführung das Pseudonym eines Teilnehmers dessen verschlüsselter Datensatz ist, enthält der Notarserver weiterhin Mittel zur Ver- und Entschlüsselung 612 von Datensätzen der Teilnehmer. Dies kann beispielsweise ein Prozessor mit zugeordnetem Datenspeicher sein, wobei der Datenspeicher einen vom Prozessor ausführbaren Programmcode enthält, der Computerausführbare Anweisungen enthält, welche angepasst sind um einen Datensatz gemäß eines bestimmten Verschlüsselungsverfahrens zu ver- und entschlüsseln.

Der Transaktionsserver 620 enthält Mittel zum Anstoßen einer Transaktion 621, was zum Beispiel im Falle einer Finanztransaktion eine Kommunikationsverbindung mit einer Bank sein kann. Für den Fall, dass zur Erhöhung der Sicherheit des Verfahrens die Transaktionsdatensätze durch das Anwendungsprogramm verschlüsselt werden, enthält der Transaktionsserver 620 weiterhin Mittel zur Entschlüsselung 622 der Transaktionsdatensätze, welche analog zu 612 ausgeführt sein können.

Das Endgerät eines Teilnehmers 630 enthält eine Datenbank 631, in welcher beispielsweise nach erfolgter Registrierung eines Anwendungsprogramms das Pseudonym des Teilnehmers gespeichert ist. Weiter enthält das Endgerät eines Teilnehmers 630 eine Nummern- oder Zeichenfolge, welche das Endgerät eindeutig identifiziert 632, zum Beispiel die GUID des Endgeräts. Für den Fall, dass Transaktionsdatensätze verschlüsselt an den Transaktionsserver übermittelt werden sollen, enthält das Endgerät eines Teilnehmers weiterhin Mittel zur Verschlüsselung von Datensätzen 633, welche analog zu 612 ausgeführt sein können. Weiter enthält das Endgerät 630 das Anwendungsprogramm 634, welches zur Durchführung der Transaktionen benötigt wird. Dieses ist in der Lage auf die GUID 632, auf die Datenbank 631 sowie auf die Mittel zur Verschlüsselung 633 zuzugreifen. Weiter enthält das Endgerät 630 einen Sensor 635, mit dem Pseudonyme von Teilnehmern erfasst werden können. Dieser Sensor ist operativ an das Anwendungsprogramm gekoppelt, sodass das Anwendungsprogramm Informationen vom Sensor empfangen kann.

Zwischen dem Endgerät 630 und dem Notarserver 610 bestehen Kommunikationskanäle, welche zur Authentifizierung eines Teilnehmers 604 sowie zur Registrierung eines Anwendungsprogramms auf einen Teilnehmer 605 genutzt werden können. Weiter besteht ein Kommunikationskanal zwischen dem Endgerät 630 und dem Transaktionsserver 620, über welchen Transaktionsdatensätze 603 vom Endgerät an den Transaktionsserver übermittelt werden. Da der Transaktionsserver 620 Pseudonyme zunächst nicht verarbeiten kann, besteht zwischen dem Transaktionsserver 620 und dem Notarserver 610 ebenfalls eine Kommunikationsverbindung, über welche der Transaktionsserver 620 Daten von Teilnehmern anfragen kann 601, woraufhin der Notarserver 610 dem Transaktionsserver 620 entsprechende Daten bereitstellen kann 602.

Anhand des Systems 600 wird im Folgenden das Verfahren gemäß Figur 4 erläutert. Dabei wird davon ausgegangen, dass das Anwendungsprogramm auf einen der Teilnehmer registriert ist. Zum Zwecke einer besseren Übersichtlichkeit wird hierbei nur ein Transaktionsserver eingesetzt. Weiter ist auch nur ein Endgerät eines Teilnehmers dargestellt, welches stellvertretend für eine Vielzahl von Endgeräten der Teilnehmer anzusehen ist.

Zunächst werden die Pseudonyme der Teilnehmer der Transaktion durch den Sensor 635 erfasst und an das Anwendungsprogramm 634 weitergegeben. Zusätzlich erfolgt eine Erfassung der Transaktionsparameter durch das Anwendungsprogramm 634 sowie eine Erfassung der GUID 632 des Endgeräts 630. Das in der Datenbank 631 enthaltene Pseudonym des ersten Teilnehmers wird ebenfalls durch das Anwendungsprogramm 634 ausgelesen und dem Transaktionsdatensatz hinzugefügt. Der so entstandene Datensatz bestehend aus dem Pseudonym des ersten Teilnehmers, den Pseudonymen der weiteren Teilnehmer, der GUID des Endgeräts, sowie den Transaktionsparametern, wird nun verschlüsselt 633. Der verschlüsselte Transaktionsdatensatz wird nun entlang des Kommunikationskanals 603 an den Transaktionsserver 620 übermittelt. Dieser führt die Entschlüsselung 622 des Transaktionsdatensatzes durch. Anschließend extrahiert der Transaktionsserver die Pseudonyme der Teilnehmer sowie die GUID des Endgeräts, auf welchem der Transaktionsdatensatz erstellt wurde, aus dem Transaktionsdatensatz. Die zu den Pseudonymen gehörenden Transaktionsdaten werden nun durch den Transaktionsserver 620 am Notarserver 610 angefragt 601. Weiter wird auch die zuvor extrahierte GUID an den Notarserver übermittelt. Der Notarserver 610 prüft nun, ob die erhaltene GUID im Datensatz des ersten Teilnehmers hinterlegt ist. Ist dies nicht der Fall, wird das Verfahren abgebrochen, da davon ausgegangen werden muss, dass das Anwendungsprogramm gegen den Willen des ersten Teilnehmers verwendet wird, beispielsweise aufgrund einer Extraktion des Anwendungsprogramms vom Endgerät des ersten Teilnehmers. Stimmt jedoch die empfangene GUID mit der GUID überein, welche im Datensatz des ersten Teilnehmers enthalten ist, wird eine Authentifizierungsanfrage 604 an die Endgeräte 630 der weiteren Teilnehmer gesendet. Wird die Authentifizierungsanfrage von wenigstens einem Teilnehmer nicht bestätigt, so wird das Verfahren abgebrochen, da davon ausgegangen werden muss, dass das Pseudonym eines Teilnehmers manipuliert worden ist. Wird jedoch die Authentifizierungsanfrage von allen Teilnehmern bestätigt, ordnet der Notarserver den Pseudonymen die entsprechenden Teilnehmer mit den jeweiligen Transaktionsdaten zu und übermittelt die Transaktionsdaten der Teilnehmer 602 an den Transaktionsserver 620. Dieser führt nun unter Verwendung der zuvor empfangenen Transaktionsparameter die Transaktion durch 621 oder stößt sie an.

### Bezugszeichenliste

- 601: Anfrage von Daten
- 602: Bereitstellung von Daten
- 603: Übermittlung eines Transaktionsdatensatzes
- 604: Authentifizierung
- 605: Registrierung
- 610: Notarserver
- 611: Datenbank
- 612: Ver- und Entschlüsselung
- 620: Transaktionsserver
- 621: Anstoßen einer Transaktion
- 622: Entschlüsselung
- 630: Endgerät eines Teilnehmers
- 631: Datenbank
- 632: GUID
- 633: Verschlüsselung
- 634: Anwendungsprogramm
- 635: Sensor

## Patentansprüche

1. Verfahren zur Durchführung von Transaktionen zwischen einer Anzahl von Teilnehmern, wobei es sich bei der Transaktion um eine Nachrichtenübermittlung handelt, wobei jedem der Teilnehmer ein eindeutiges Pseudonym zugeordnet ist, wobei die Zuordnung eines Pseudonyms zu einem Teilnehmer, sowie die Transaktionsdaten des Teilnehmers auf einem Notarserver (610) gespeichert sind, wobei das Verfahren folgende Schritte beinhaltet:
- Bereitstellen eines Anwendungsprogramms (634) und mindestens eines Transaktionsservers (620),
wobei das Anwendungsprogramms (634) auf einem Endgerät (630) eines ersten der Teilnehmer installiert ist, wobei das Anwendungsprogramm (634) auf den ersten Teilnehmer registriert (605) ist, sodass dessen Pseudonym dem Anwendungsprogramm (634) bekannt ist, wobei ein das Endgerät (630) des ersten Teilnehmers eindeutig identifizierender Parameter (632) auf dem Notarserver (610) gespeichert, wobei das Anwendungsprogramm den das Endgerät (630) des ersten Teilnehmers eindeutig identifizierender Parameter (632) ermitteln kann,
- Erfassung des Pseudonyms eines ersten der Teilnehmer durch das Anwendungsprogramm (634),
- Sensorische Erfassung des Pseudonyms mindestens eines zweiten Teilnehmers durch das Anwendungsprogramm (634) mittels visueller Erfassung eines QR-Codes eines verschlüsselten Datensatzes des zweiten Teilnehmers, welcher das Pseudonym des zweiten Teilnehmers ist,
- Übermittlung von Transaktionsparametern an das Anwendungsprogramm (634), wobei es sich bei den Transaktionsparametern um eine zu übermittelnde Nachricht handelt,
- Übermittlung eines Transaktionsdatensatzes, welcher die Pseudonyme, die Transaktionsparameter und den das Endgerät (630) eindeutig identifizierenden Parameter (632) umfasst, von dem Anwendungsprogramm (634) an den mindestens einen Transaktionsserver (620) über das Internet oder einen anderen Kommunikationskanal, wobei zumindest ein Teil des Transaktionsdatensatzes, die Pseudonyme der Teilnehmer, die Transaktionsparameter und den das Endgerät (630) eindeutig identifizierenden Parameter (632) beinhaltend, vor der Übermittlung von dem Anwendungsprogramm (634) zu dem mindestens einen Transaktionsserver (620) durch das Anwendungsprogramm (634) verschlüsselt und durch den mindestens einen Transaktionsserver (620) nach Eingang des Transaktionsdatensatzes wieder entschlüsselt wird,
- Übermittlung der Pseudonyme und des das Endgerät (630) eindeutig identifizierenden Parameters (632) von dem mindestens einen Transaktionsserver (620) an den Notarserver (610),
- Identifikation der Teilnehmer anhand der Pseudonyme durch den Notarserver (610), wobei der Notarserver (610) den das Endgerät (630) eindeutig identifizierenden Parameter (632) prüft,
- auf eine erfolgreiche Prüfung des das Endgerät (630) eindeutig identifizierenden Parameters (632) hin, Entschlüsselung der in den Pseudonymen der Teilnehmer enthaltenen Transaktionsdaten,
- Übermittlung der Transaktionsdaten der Teilnehmer an den mindestens einen Transaktionsserver (620) durch den Notarserver (610), wobei die Transaktionsdaten der Teilnehmer dem mindestens einen Transaktionsserver (620) nur auf Anfrage des mindestens einen Transaktionsservers (620) bereitgestellt werden,
- Durchführung der Transaktion zwischen dem ersten Teilnehmer und dem mindestens einen zweiten Teilnehmer anhand der Transaktionsparameter durch den mindestens einen Transaktionsserver (620),
wobei Transaktionsdaten eines Teilnehmers transaktionslimitierende Daten sind, ohne deren Kenntnis eine Transaktion nicht durchgeführt werden kann und die für jede Transaktion des Teilnehmers gleich bleiben, und wobei Transaktionsparameter Daten sind, welche für jede Transaktion des Teilnehmers unterschiedlich sein können und nicht transaktionslimitierend sind, wobei das Pseudonym eines Teilnehmers der verschlüsselte Datensatz des Teilnehmers ist, wobei der Schlüssel zur Entschlüsselung des Datensatzes im Notarserver (610) gespeichert ist.

2. Verfahren nach einem der vorhergehenden Ansprüche, wobei dem Pseudonym des ersten und/oder zweiten der Teilnehmer folgende Daten zugeordnet sind:
- den Teilnehmer eindeutig identifizierende Informationen,
- dem Teilnehmer eindeutig zugeordnete Kanal-Informationen zur Spezifizierung eines Kommunikationskanals zwischen Notarserver (610) und Anwendungsprogramm (634),
- Transaktionsdaten des Teilnehmers,
wobei die Daten mit dem zugeordneten Pseudonym auf dem Notarserver (610) gespeichert sind.

3. Verfahren nach einem der vorhergehenden Ansprüche, wobei jeder Art von Transaktion und/oder jeder Transaktion selbst eine Methode der Verschlüsselung und/oder der verwendete Schlüssel zur Verschlüsselung des Transaktionsdatensatzes zugeordnet sind.

4. Verfahren nach einem der vorhergehenden Ansprüche, wobei eine Transaktion nur durchgeführt wird, wenn der mindestens eine weitere Teilnehmer und/oder alle weiteren beteiligten Teilnehmer nach Eingang eines Transaktionsdatensatzes bei einem Transaktionsserver (620) durch einen Transaktionsserver (620) und/oder einen Notarserver (610) authentifiziert wurden.

5. Verfahren nach Anspruch 4, wobei jeder Teilnehmer über mindestens ein Anwendungsprogramm (634) verfügt, das auf den jeweiligen Teilnehmer registriert ist, wobei die Authentifizierung des mindestens einen weiteren Teilnehmers folgende Schritte beinhaltet:
- Festlegen eines Gültigkeitszeitfensters für einen Transaktionsdatensatz,
- Einfügen eines Zeitstempels in den Transaktionsdatensatz durch das Anwendungsprogramm (634),
- Überprüfen durch den Transaktionsserver (620), ob der Empfang und/oder die Verarbeitung des Transaktionsdatensatzes durch den Transaktionsserver (620) in das Gültigkeitszeitfenster des Transaktionsdatensatzes fällt,
- Falls dies der Fall ist: Anfordern einer Bestätigung des Transaktionsauftrags über das Anwendungsprogramm (634) des mindestens einen weiteren Teilnehmers,
- Falls dies nicht der Fall ist: Verwerfen des Transaktionsdatensatzes.

6. Verfahren nach einem der vorhergehenden Ansprüche, wobei die Registrierung des Anwendungsprogramms (634) auf einen Teilnehmer folgende Schritte beinhaltet:
- Sensorische Erfassung des Pseudonyms des Teilnehmers durch das Anwendungsprogramm (634),
- Ermitteln eines, das Endgerät (630), auf dem die Anwendungsprogramm (634) installiert ist, eindeutig identifizierenden Parameters,
- Übermitteln des Pseudonyms des Teilnehmers und des das Endgerät (630) eindeutig identifizierenden Parameters an den Notarserver (610),
- Übermitteln einer, dem Teilnehmer durch den Notarserver (610) eindeutig zuordenbaren Teilnehmer-Information an den Notarserver (610),
- Überprüfen durch den Notarserver (610), ob die dem Teilnehmer zuordenbare Information in dem Datensatz enthalten ist, dem das Pseudonym des Teilnehmers zugeordnet ist.

7. System, zur Durchführung von Transaktionen zwischen einer Anzahl von Teilnehmern, wobei es sich bei der Transaktion um eine Nachrichtenübermittlung handelt, wobei das System mindestens einen Transaktionsserver (620) und einen Notarserver (610) umfasst, wobei der Transaktionsserver (620) und der Notarserver (610) dazu konfiguriert sind über das Internet und/oder einen anderen Kommunikationskanal zu kommunizieren, wobei jedem der Teilnehmer ein eindeutiges Pseudonym zugeordnet ist, wobei die Zuordnung eines Pseudonyms zu einem Teilnehmer, sowie die Transaktionsdaten des Teilnehmers auf dem Notarserver (610) gespeichert sind, wobei das System dazu konfiguriert ist folgende Schritte auszuführen:
- Bereitstellen eines Anwendungsprogramms (634),
- wobei das Anwendungsprogramms (634) auf einem Endgerät (630) eines ersten der Teilnehmer installiert ist, wobei das Anwendungsprogramm (634) auf den ersten Teilnehmer registriert (605) ist, sodass dessen Pseudonym dem Anwendungsprogramm (634) bekannt ist, wobei ein das Endgerät (630) des ersten Teilnehmers eindeutig identifizierender Parameter (632) auf dem Notarserver (610) gespeichert, wobei das Anwendungsprogramm den das Endgerät (630) des ersten Teilnehmers eindeutig identifizierender Parameter (632) ermitteln kann,
- Erfassung des Pseudonyms eines ersten Teilnehmers durch das Anwendungsprogramm (634),
- Sensorische Erfassung des Pseudonyms mindestens eines zweiten Teilnehmers durch das Anwendungsprogramm (634) mittels visueller Erfassung eines QR-Codes eines verschlüsselten Datensatzes des zweiten Teilnehmers, welcher das Pseudonym des zweiten Teilnehmers ist,
- Übermittlung von Transaktionsparametern an das Anwendungsprogramm (634), wobei es sich bei den Transaktionsparametern um eine zu übermittelnde Nachricht handelt,
- Übermittlung eines Transaktionsdatensatzes, welcher die Pseudonyme, die Transaktionsparameter und den das Endgerät (630) eindeutig identifizierenden Parameter (632) umfasst, von dem Anwendungsprogramm (634) an den mindestens einen Transaktionsserver (620) über das Internet oder einen anderen Kommunikationskanal, wobei zumindest ein Teil des Transaktionsdatensatzes, die Pseudonyme der Teilnehmer, die Transaktionsparameter und den das Endgerät (630) eindeutig identifizierenden Parameter (632) beinhaltend, vor der Übermittlung von dem Anwendungsprogramm (634) zu dem mindestens einen Transaktionsserver (620) durch das Anwendungsprogramm (634) verschlüsselt und durch den mindestens einen Transaktionsserver (620) nach Eingang des Transaktionsdatensatzes wieder entschlüsselt wird,
- Übermittlung der Pseudonyme und des das Endgerät (630) eindeutig identifizierenden Parameters (632) von dem mindestens einen Transaktionsserver (620) an den Notarserver (610),
- Identifikation der Teilnehmer anhand der Pseudonyme durch den Notarserver (610), wobei der Notarserver (610) den das Endgerät (630) eindeutig identifizierenden Parameter (632) prüft,
- auf eine erfolgreiche Prüfung des das Endgerät (630) eindeutig identifizierenden Parameters (632) hin, Entschlüsselung der in den Pseudonymen der Teilnehmer enthaltenen Transaktionsdaten,
- Übermittlung der Transaktionsdaten der Teilnehmer an den mindestens einen Transaktionsserver (620) durch den Notarserver (610), wobei die Transaktionsdaten der Teilnehmer dem mindestens einen Transaktionsserver (620) nur auf Anfrage des mindestens einen Transaktionsservers (620) bereitgestellt werden,
- Durchführung der Transaktion zwischen dem ersten Teilnehmer und dem mindestens einen zweiten Teilnehmer anhand der Transaktionsparameter durch den mindestens einen Transaktionsserver (620),
wobei Transaktionsdaten eines Teilnehmers transaktionslimitierende Daten sind, ohne deren Kenntnis eine Transaktion nicht durchgeführt werden kann und die für jede Transaktion des Teilnehmers gleich bleiben, und wobei Transaktionsparameter Daten sind, welche für jede Transaktion des Teilnehmers unterschiedlich sein können und nicht transaktionslimitierend sind, wobei das Pseudonym eines Teilnehmers der verschlüsselte Datensatz des Teilnehmers ist, wobei der Schlüssel zur Entschlüsselung des Datensatzes im Notarserver (610) gespeichert ist.

8. System nach Anspruch 7 weiter ein Endgerät (630) eines Teilnehmers beinhaltend, wobei auf dem Endgerät (630) des Teilnehmers ein Anwendungsprogramm (634), welches die Durchführung des zuvor beschriebenen Verfahrens ermöglicht, installiert ist.

9. System nach Anspruch 8, wobei durch den Notarserver (610) das Endgerät (630), auf dem das Anwendungsprogramm (634) installiert ist, einem Teilnehmer eindeutig zugeordnet werden kann.

10. Computerprogrammprodukt, welches angepasst ist um die zuvor beschrieben Verfahrensschritte eines der Ansprüche 1 bis 6 durchzuführen.

## Claims

1. A method for carrying out transactions among a number of participants, the transaction being a transmission of messages, a unique pseudonym being assigned to each of the participants, the assignment of a pseudonym to a participant as well as the transaction data of the participant being stored on a notary server (610), the method comprising the following steps:
- providing an application program (634) and at least one transaction server (620),
the application program (634) being installed on a terminal (630) of a first of the participants, the application program (634) being registered (605) to the first participant so that his or her pseudonym is known to the application program (634), a parameter (632) uniquely identifying the terminal (630) of the first participant being stored on the notary server (610), the application program being able to determine the parameter (632) uniquely identifying the terminal (630) of the first participant;
- capturing the pseudonym of a first of the participants by the application program (634);
- capturing, using sensors, the pseudonym of at least one second participant by the application program (634) by means of optical capturing of a QR code of an encrypted record of the second participant, which is the pseudonym of the second participant;
- transmitting transaction parameters to the application program (634), the transaction parameters being a message to be transmitted;
- transmitting a transaction record, which includes the pseudonyms, the transaction parameters and the parameter (632) uniquely identifying the terminal (630), from the application program (634) to the at least one transaction server (620) via the Internet or another communication channel, at least a portion of the transaction record, which includes the pseudonyms of the participants, the transaction parameters and the parameter (632) uniquely identifying the terminal (630), being encrypted by the application program (634) prior to the transmission from the application program (634) to the at least one transaction server (620) and being decrypted again by the at least one transaction server (620) after the transaction record has been received;
- transmitting the pseudonyms and the parameter (632) uniquely identifying the terminal (630) from the at least one transaction server (620) to the notary server (610);
- identifying the participants based on the pseudonyms by the notary server (610), the notary server (610) checking the parameter (632) uniquely identifying the terminal (630);
- decrypting the transaction data included in the pseudonyms of the participants in response to a successful check of the parameter (632) uniquely identifying the terminal (630);
- transmitting the transaction data of the participants to the at least one transaction server (620) by the notary server (610), the transaction data of the participants only being provided to the at least one transaction server (620) at the request of the at least one transaction server (620); and
- carrying out the transaction between the first participant and the at least one second participant by the at least one transaction server (620) based on the transaction parameters,
transaction data of a participant being transaction-limiting data, without knowledge of which a transaction cannot be carried out and which remains the same for every transaction of the participant, and transaction parameters being data that can be different for every transaction of the participant and that is not transaction-limiting, the pseudonym of a participant being the encrypted record of the participant, and the key for decrypting the record being stored in the notary server (610).

2. A method according to any one of the preceding claims, wherein the following data is assigned to the pseudonym of the first and/or second of the participants:
- pieces of information uniquely identifying the participant;
- pieces of channel information, uniquely assigned to the participant, for specifying a communication channel between the notary server (610) and the application program (634); and
- transaction data of the participant,
the data, including the assigned pseudonym, being stored on the notary server (610).

3. A method according to any one of the preceding claims, wherein every type of transaction and/or every transaction itself is assigned a method for encryption and/or key used for the encryption of the transaction record.

4. A method according to any one of the preceding claims, wherein a transaction is only carried out when the at least one other participant and/or all other participants involved have been authenticated by a transaction server (620) and/or a notary server (610) after a transaction server (620) has received a transaction record.

5. The method according to claim 4, wherein every participant has at least one application program (634) which is registered to the particular participant, the authentication of the at least one other participant including the following steps:
- establishing a validity time window for a transaction record;
- inserting a time stamp into the transaction record by the application program (634);
- checking by the transaction server (620) as to whether the receipt and/or the processing of the transaction record by the transaction server (620) falls within the validity time window of the transaction record;
- if this is the case, requesting a confirmation of the transaction request through the application program (634) of the at least one other participant;
- if this is not the case, discarding the transaction record.

6. A method according to any one of the preceding claims, wherein the registration of the application program (634) to a participant includes the following steps:
- capturing, using sensors, the pseudonym of the participant by the application program (634);
- determining a parameter uniquely identifying the terminal (630) on which the application program (634) is installed;
- transmitting the pseudonym of the participant and of the parameter uniquely identifying the terminal (630) to the notary server (610);
- transmitting a piece of participant information uniquely assignable to the participant by the notary server (610) to the notary server (610); and
- checking by the notary server (610) as to whether the piece of information assignable to the participant is included in the record to which the pseudonym of the participant is assigned.

7. A system for carrying out transactions among a number of participants, the transaction being a transmission of messages, the system comprising at least one transaction server (620) and a notary server (610), the transaction server (620) and the notary server (610) being configured to communicate via the Internet and/or another communication channel, a unique pseudonym being assigned to each of the participants, the assignment of a pseudonym to a participant as well as the transaction data of the participant being stored on the notary server (610), and the system being configured to execute the following steps:
- providing an application program (634),
- the application program (634) being installed on a terminal (630) of a first of the participants, the application program (634) being registered (605) to the first participant so that his or her pseudonym is known to the application program (634), a parameter (632) uniquely identifying the terminal (630) of the first participant being stored on the notary server (610), the application program being able to determine the parameter (632) uniquely identifying the terminal (630) of the first participant;
- capturing the pseudonym of a first participant by the application program (634);
- capturing, using sensors, the pseudonym of at least one second participant by the application program (634) by means of optical capturing of a QR code of an encrypted record of the second participant, which is the pseudonym of the second participant;
- transmitting transaction parameters to the application program (634), the transaction parameters being a message to be transmitted;
- transmitting a transaction record, which includes the pseudonyms, the transaction parameters and the parameter (632) uniquely identifying the terminal (630), from the application program (634) to the at least one transaction server (620) via the Internet or another communication channel, at least a portion of the transaction record, which includes the pseudonyms of the participants, the transaction parameters and the parameter (632) uniquely identifying the terminal (630), being encrypted by the application program (634) prior to the transmission from the application program (634) to the at least one transaction server (620) and being decrypted again by the at least one transaction server (620) after the transaction record has been received;
- transmitting the pseudonyms and the parameter (632) uniquely identifying the terminal (630) from the at least one transaction server (620) to the notary server (610);
- identifying the participants based on the pseudonyms by the notary server (610), the notary server (610) checking the parameter (632) uniquely identifying the terminal (630);
- decrypting the transaction data included in the pseudonyms of the participants in response to a successful check of the parameter (632) uniquely identifying the terminal (630);
- transmitting the transaction data of the participants to the at least one transaction server (620) by the notary server (610), the transaction data of the participants only being provided to the at least one transaction server (620) at the request of the at least one transaction server (620); and
- carrying out the transaction between the first participant and the at least one second participant by the at least one transaction server (620) based on the transaction parameters,
transaction data of a participant being transaction-limiting data, without knowledge of which a transaction cannot be carried out and which remains the same for every transaction of the participant, and transaction parameters being data that can be different for every transaction of the participant and that is not transaction-limiting, the pseudonym of a participant being the encrypted record of the participant, and the key for decrypting the record being stored in the notary server (610).

8. The system according to claim 7, furthermore comprising a terminal (630) of a participant, wherein an application program (634) is installed on the terminal (630) of the participant which allows the above-described method to be carried out.

9. The system according to claim 8, wherein the terminal (630) on which the application program (634) is installed, can be uniquely assigned to a participant by the notary server (610).

10. A computer program product, which is adapted to carry out the above-described method steps of one of claims 1 to 6.

## Revendications

1. Procédé d'exécution de transactions entre un certain nombre de participants, dans lequel, dans le cas de la transaction, il s'agit d'une transmission d'informations, où un pseudonyme explicite est associé à chacun des participants, où l'association d'un pseudonyme à un participant ainsi que les données de transaction du participant sont stockées sur un serveur notarial (610), où le procédé comporte les étapes suivantes :
- la mise au point d'un programme d'application (634) et d'au moins un serveur de transactions (620),
où le programme d'application (634) est installé sur un appareil terminal (630) d'un premier des participants, où le programme d'application (634) est enregistré (605) pour le premier participant de sorte que son pseudonyme est connu par le programme d'application (634), où un paramètre (632) identifiant de manière spécifique l'appareil terminal (630) du premier participant est stocké sur le serveur notarial (610), où le programme d'application peut déterminer le paramètre (632) identifiant de manière spécifique l'appareil terminal (630) du premier participant,
- la saisie du pseudonyme d'un premier des participants par le programme d'application (634),
- la saisie sensorielle du pseudonyme d'au moins un deuxième participant par le programme d'application (634) au moyen d'une saisie visuelle d'un code à réponse rapide QR-code d'un ensemble de données chiffrées du deuxième participant, lequel est le pseudonyme du deuxième participant,
- la transmission de paramètres de transaction au programme d'application (634), où, dans le cas des paramètres de transaction, il s'agit d'une information à transmettre,
- la transmission d'un ensemble de données de transaction, lequel comprend les pseudonymes, les paramètres de transaction et le paramètre (632) identifiant de manière spécifique l'appareil terminal (630), par le programme d'application (634), à l'au moins un serveur de transaction (620) par le biais d'internet ou d'un autre canal de communication, où au moins une partie de l'ensemble de données de transaction, les pseudonymes des participants, les paramètres de transaction et contenant le paramètre (632) identifiant de manière spécifique l'appareil terminal (630), est chiffrée par le programme d'application (634) avant la transmission du programme d'application (634) vers l'au moins un serveur de transactions (620), et est de nouveau déchiffrée par l'au moins un serveur de transaction (620) après l'entrée de l'ensemble de données de transaction,
- la transmission des pseudonymes et du paramètre (632) identifiant de manière spécifique l'appareil terminal (630) à partir de l'au moins un serveur de transaction (620) au serveur notarial (610),
- l'identification des participants à l'aide des pseudonymes par le serveur notarial (610), où le serveur notarial (610) vérifie le paramètre (632) identifiant de manière spécifique l'appareil terminal (630),
- suite à une vérification réussie du paramètre (632) identifiant de manière spécifique l'appareil terminal ((630), le déchiffrement des données de transaction contenues dans les pseudonymes des participants,
- la transmission des données de transaction des participants à l'au moins un serveur de transaction (620) par le serveur notarial (610), où les données de transaction des participants sont mises à disposition de l'au moins un serveur de transaction (620) uniquement sur demande de l'au moins un serveur de transaction (620),
- l'exécution de la transaction entre le premier participant et l'au moins un deuxième participant à l'aide des paramètres de transaction par l'au moins un serveur de transaction (620),
dans lequel les données de transaction d'un participant sont des données de limitation de la transaction sans la connaissance desquelles une transaction ne peut pas être exécutée, et qui restent constantes pour chaque transaction du participant, et où les paramètres de transaction sont des données lesquelles peuvent être différentes pour chaque transaction du participant et ne limitent pas la transaction, où le pseudonyme d'un participant est l'ensemble de données chiffré du participant, où la clé permettant le déchiffrement de l'ensemble de données est stockée dans le serveur notarial (610).

2. Procédé selon l'une des revendications précédentes, dans lequel les données suivantes sont associées au premier et/ou au deuxième des participants :
- les informations identifiant de manière spécifique le participant,
- des informations de canal associées de manière spécifique au participant pour la spécification d'un canal de communication entre le serveur notarial (610) et le programme d'application (634),
- des données de transaction du participant,
dans lequel les données avec le pseudonyme associé sont stockées sur le serveur notarial (610).

3. Procédé selon l'une des revendications précédentes, dans lequel une méthode de chiffrement et/ou la clé employée pour le chiffrement de l'ensemble de données de transaction sont associées à chaque type de transaction et/ou à chaque transaction elle-même.

4. Procédé selon l'une des revendications précédentes, dans lequel une transaction n'est exécutée que si l'au moins un autre participant et/ou tous les autres participants impliqués ont été authentifiés après la saisie d'un ensemble de données de transaction auprès d'un serveur de transactions (620) par un serveur de transactions (620) et/ou un serveur notarial (610).

5. Procédé selon la revendication 4, dans lequel chaque participant dispose d'au moins un programme d'application (634), qui est enregistré pour le participant respectif, où l'authentification de l'au moins un autre participant contient les étapes suivantes :
- la désignation d'une fenêtre de temps de validité pour un ensemble de données de transaction,
- la mise en place d'un horodatage pour l'ensemble de données de transaction par le programme d'application (634),
- la vérification, par le serveur de transaction (620), si la réception et/ou le traitement de l'ensemble de données de transaction par le serveur de transactions (620) entre dans la fenêtre de temps de validité de l'ensemble de données de transaction,
- dans le cas où cela se produit : la demande d'une confirmation de la commande de transaction par le biais du programme d'application (634) de l'au moins un autre participant,
- dans le cas où cela ne se produit pas : le rejet de l'ensemble de données de transaction.

6. Procédé selon l'une des revendications précédentes, dans lequel l'enregistrement du programme d'application (634) pour un participant comporte les étapes suivantes :
- la saisie sensorielle du pseudonyme du participant par le programme d'application (634),
- la détermination d'un paramètre identifiant de manière spécifique l'appareil terminal (630) sur lequel le programme d'application (634) est installé,
- la transmission du pseudonyme du participant et du paramètre identifiant de manière spécifique l'appareil terminal (630) au serveur notarial (610),
- la transmission, au serveur notarial (610), d'une information relative au participant pouvant être associée de manière spécifique au participant par le serveur notarial (610),
- la vérification, par le serveur notarial (610), que l'information pouvant être associée au participant est contenue dans l'ensemble de données auquel est associé le pseudonyme du participant.

7. Système destiné à l'exécution de transactions entre un certain nombre de participants, dans lequel, dans le cas de la transaction, il s'agit d'une transmission d'informations, où le système comprend au moins un serveur de transactions (620) et un serveur notarial (610), où le serveur de transaction (620) et le serveur notarial (610) sont conçus pour communiquer par le biais d'internet et/ou d'un autre canal de communication, où un pseudonyme explicite est associé à chacun des participants, où l'association d'un pseudonyme à un participant ainsi que les données de transaction du participant sont stockées sur le serveur notarial (610), où le système est conçu pour exécuter les étapes suivantes :
- la mise au point d'un programme d'application (634),
où le programme d'application (634) est installé sur un appareil terminal (630) d'un premier des participants, où le programme d'application (634) est enregistré (605) pour le premier participant de sorte que son pseudonyme est connu par le programme d'application (634), où un paramètre (632) identifiant de manière spécifique l'appareil terminal (630) du premier participant est stocké sur le serveur notarial (610), où le programme d'application peut déterminer le paramètre (632) identifiant l'appareil terminal (630) du premier participant de manière spécifique,
- la saisie du pseudonyme d'un premier participant par le programme d'application (634),
- la saisie sensorielle du pseudonyme d'au moins un deuxième participant par le programme d'application (634) au moyen d'une saisie visuelle d'un QR-code d'un ensemble de données chiffrées du deuxième participant, lequel est le pseudonyme du deuxième participant,
- la transmission de paramètres de transaction au programme d'application (634), où, dans le cas des paramètres de transaction, il s'agit d'une information à transmettre,
- la transmission d'un ensemble de données de transaction, lequel comprend les pseudonymes, les paramètres de transaction et le paramètre (632) identifiant de manière spécifique l'appareil terminal (630), à partir du programme d'application (634) à l'au moins un serveur de transaction (620) par le biais d'internet ou d'un autre canal de communication, où au moins une partie de l'ensemble de données de transaction, les pseudonymes des participants, les paramètres de transaction et contenant le paramètre (632) identifiant de manière spécifique l'appareil terminal (630), est chiffrée par le programme d'application (634) avant la transmission du programme d'application (634) vers l'au moins un serveur de transactions (620) et est de nouveau déchiffrée par l'au moins un serveur de transaction (620) après l'entrée de l'ensemble de données de transaction,
- la transmission des pseudonymes et du paramètre (632) identifiant de manière spécifique l'appareil terminal (630) à partir de l'au moins un serveur de transaction (620) au serveur notarial (610),
- l'identification des participants à l'aide des pseudonymes par le serveur notarial (610), où le serveur notarial (610) vérifie le paramètre (632) identifiant de manière spécifique l'appareil terminal (630),
- suite à une vérification réussie du paramètre (632) identifiant de manière spécifique l'appareil terminal ((630), le déchiffrement des données de transaction contenues dans les pseudonymes des participants,
- la transmission des données de transaction des participants à l'au moins un serveur de transaction (620) par le serveur notarial (610), où les données de transaction des participants sont mises à disposition de l'au moins un serveur de transaction (620) uniquement sur demande de l'au moins un serveur de transaction (620),
- l'exécution de la transaction entre le premier participant et l'au moins un deuxième participant à l'aide des paramètres de transaction par l'au moins un serveur de transaction (620),
dans lequel les données de transaction d'un participant sont des données de limitation de la transaction, sans la connaissance desquelles une transaction ne peut pas être exécutée et qui restent constantes pour chaque transaction du participant, et où les paramètres de transaction sont des données, lesquelles peuvent être différentes pour chaque transaction du participant et ne limitent pas la transaction, où le pseudonyme d'un participant est l'ensemble de données chiffré du participant, où la clé permettant déchiffrement de l'ensemble de données est stockée dans le serveur notarial (610).

8. Système selon la revendication 7, contenant en outre un appareil terminal (630) d'un participant, où un programme d'application (634), lequel permet l'exécution du procédé précédemment décrit, est installé sur l'appareil terminal (630) du participant.

9. Système selon la revendication 8, dans lequel l'appareil terminal (630), sur lequel est installé le programme d'application (634), peut être associé de manière spécifique à un participant par le serveur notarial (610).

10. Produit-programme informatique, lequel est approprié pour exécuter les étapes de procédé selon l'une des revendications 1 à 6 précédemment décrites.
